# EUROPEAN PATENT SPECIFICATION

(11) **EP 4 570 351 B1**
(45) Date of publication and mention of the grant of the patent: **29.07.2026**
(21) Application number: 23215701.6
(22) Date of filing: 12.12.2023
(51) Int. Cl.: B01D 46/00, B01D 46/10, B01D 46/52

(54) **AMBIENT AIR FILTER DEVICE AND FILTER ELEMENT IN AMBIENT AIR FILTER DEVICE**
UMGEBUNGSLUFTFILTERVORRICHTUNG UND FILTERELEMENT IN DER UMGEBUNGSLUFTFILTERVORRICHTUNG
DISPOSITIF DE FILTRE À AIR AMBIANT ET ÉLÉMENT DE FILTRE DANS UN DISPOSITIF DE FILTRE À AIR AMBIANT

(43) Date of publication of application: 18.06.2025
(73) Proprietor: MANN+HUMMEL GmbH, 71636 Ludwigsburg (DE)
(72) Inventor: JUNGINGER, Bernd, 71636 Ludwigsburg (DE); THEBAULT, Eric, 71636 Ludwigsburg (DE); DOS SANTOS ASCENSAO, Macario Francisco, 71636 Ludwigsburg (DE)
(74) Representative: Mann + Hummel Intellectual Property

(56) References cited:
- JP-A- 2005 007 361
- US-A- 4 963 170
- US-A1- 2009 139 200
- US-A1- 2014 123 621

## Description

### TECHNICAL FIELD

The invention relates to an ambient air filter device for arrangement in a front area of a vehicle as well as a use of a filter element in an ambient air filter device.

### BACKGROUND ART

Air filters, which are integrated in the front area of vehicles, are usually arranged in a separate filter frame as part of the air duct in front of the radiator.

DE 102008013501 A1 discloses a filter element for insertion into a filter housing, including a bellows made of a filter medium, which is at least partially surrounded by a frame, and at least one end element, the frame being attached to the bellows and is molded onto the end element. At least on the bellows facing side of the end element undercuts are formed.

KR 20140147553 A discloses an apparatus for collecting fine dust floating in the air by driving a vehicle without an external power, including an inlet part including an air inlet hole formed on the front end based on the direction of the driving vehicle, a filter part extended from the inlet part and including at least one filter inside, and an outlet part including an air inlet hole extended from the filter part and formed on the back end based on the direction of driving vehicle. The air passes through the inlet part, the filter part, and the outlet hole by air when driving the vehicle.

US 2014/123621 discloses an inlet hood for use with a gas turbine or compressor air inlet system includes a frame and at least one pre-filter pivotably held by the frame in an operating position. The pre-filter is pivotable to a bypass position angled relative to the operating position.

### SUMMARY

It is an object of the invention to provide an ambient air filter device for arrangement in a front area of a vehicle with a bypass feature.

Another object is to provide a use of a filter element in such an ambient air filter device.

According to an aspect of the invention the object is achieved by an ambient air filter device for arrangement in a front area of a vehicle, the ambient air filter device including an installation frame, and a filter element arranged on the installation frame. The installation frame includes a flow-through area through which a fluid flow passing through the filter element can pass, and at least one guiding member arranged on opposing sides of the flow-through area and for mounting the filter element along an insertion direction. The filter element includes at least one filter medium body having at least one part tiltable about a tilt axis against a through-flow direction of the filter element to provide a bypass channel for the fluid flow to bypass the filter element. The at least one filter medium body comprises a pleated medium. The tilt axis lies substantially parallel to one of pleats of the pleated medium.

According to a further aspect of the invention the further object is achieved by use of a filter element in the ambient air filter device, the filter element including an air inlet side and an air outlet side through which the fluid flow can pass to the installation frame, has and the at least one filter medium body having the at least one part tiltable about the tilt axis against the through-flow direction of the filter element to provide the bypass channel for the fluid flow to bypass the filter element.

Advantageous embodiments are described in the dependent claims, the description and the drawings.

The proposed ambient air filter device with the filter element serves for filtering air destined to flow through a radiator of a cooler of a vehicle. Therefore the ambient air filter device is arranged in front of the cooler with a design as flat as possible for packaging and assurance classification reasons. In order to avoid contact of the filter element with the radiator, the embodiments may use a flat flow-through plastic plate, with a mesh-like grid structure, on which the filter element is fixed. Implications on a crash zone of the vehicle may advantageously be prevented.

In standard operation all air flowing through the cooler is passing before the filter element in order to be filtered. Due to pressure loss in the filter element air flow through the cooler is limited. In a thermally critical situation or when the filter element is blocked (e.g., by snow) and an air conditioning (A/C) heat pump does not receive enough fresh air to work, the air streams shall be enhanced by opening a bypass and part of the air may flow directly to the cooler and the A/C heat pump. The bypass is achieved by tilting at least part of the filter element away from the flow-through area of the installation frame. The tilt axis advantageously lies parallel to the installation frame.

Thermal management in vehicles is a crucial aspect especially for battery electric vehicles which needs to be considered. In particular, the charging time of the battery is a critical value. The most critical case is fast charging of the battery under high outside temperatures together with high load just before starting the battery charging. Also, the A/C heat pump needs fresh air to work properly, and blocking of the filter element may prevent the A/C heat pump from receiving fresh air.

For the thermal management and to assure that the A/C heat pump receives the fresh air it needs, the creation of a bypass of the air flowing around the filter element may be advantageous. Hence it is possible that the thermal management of the vehicle in critical situations is not at risk. Therefore, the concept of a flat frame filter device is slightly adapted so it is possible to mount one, two or more parts of a filter element in the frame. By usage of an actuator or magnets one or more of the lower and/or upper parts are movable in a direction away from the cooler of the vehicle so that a bypass for the air flow is opened. The side which is open is depending on assembly space of the cooler pack and the flow path of the air. The filter element can be connected, e.g., with a side band, so it is possible to perform a tilting movement of the filter element when opening the bypass. Additionally, the packaging of the filter element can be smaller since the filter element potentially can be folded.

Thus, at least part of the filter element is tiltable so that at least a part of the filter medium body is moved away from the installation frame. In the tilted position, such a filter element enables a bypass for the air normally passing the filter element and in that way makes sure that the thermal management and especially the battery charging time is not affected by the presence of the filter element in front of the radiator of the cooler of the vehicle. Further, the bypass makes sure that the A/C heat pump always receives fresh air so that the A/C heat pump can work properly, even if the filter element is blocked.

According to a favorable embodiment of the ambient air filter device, the at least one filter medium body may include a pleated medium. The tilt axis may lie substantially parallel to one of pleats of the pleated medium, in particular in one of the pleats of the pleated medium. Thus, a one-part filter element may be tilted advantageously parallel to a pleat of the filter medium body.

According to a favorable embodiment of the ambient air filter device, the ambient air filter device may further include side bands covering at least parts of opposing sides of the at least one filter medium body. The side bands enable even a filter element including at least two parts of filter medium bodies to be tilted wherein the parts are kept in a fixed distance to each other by the side bands. Advantageously, the side bands may be arranged perpendicular to the tilt axis.

According to a favorable embodiment of the ambient air filter device, the ambient air filter device may further include a sealing arranged at least on one side of the at least one filter medium body, in particular pointing in the insertion direction. The sealing may be a foam sealing. Thus, the filter element may be positioned in a sealed position when mounted to a frame of the vehicle.

According to a favorable embodiment of the ambient air filter device, the installation frame may further include at least one end stop element for limiting a tilt movement of the at least one part of the at least one filter medium body. The end stop element limits a tilt movement of the part of the filter element to be tilted, thus providing a defined bypass opening for the air bypassing the filter element.

According to a favorable embodiment of the ambient air filter device, the filter element may include at least two filter medium bodies. At least one of the at least two filter medium bodies may be tiltable about the tilt axis against the through-flow direction of the filter element to provide the bypass channel for the fluid flow to bypass the filter element. Thus, advantageously, at least one of the filter medium bodies may be tilted, providing a defined bypass opening for the air bypassing the filter element. The other one of the filter medium bodies still remains parallel to the installation frame.

According to a favorable embodiment of the ambient air filter device, the at least two filter medium bodies may be joined together by a side band and/or a hinge, in particular a plastic hinge. By this way, the two filter medium bodies may be tilted against each other along the defined tilt axis.

According to a favorable embodiment of the ambient air filter device, the insertion direction may be substantially perpendicular to the through-flow direction of the filter element. Thus, tilting at least part of the filter element enables a bypass opening for part of the air bypassing the filter element.

According to a favorable embodiment of the ambient air filter device, the installation frame may include an end stop, in particular a protrusion, arranged at a lower end in the insertion direction, the end stop being for fixing the filter element in an intended mounting position. The end stop may include another flow-through area through which the fluid flow bypassing filter element can pass. The end stop fixes the filter element in the mounting position and prevents the filter element to be demounted even when part of the filter element is tilted against the installation frame.

According to a favorable embodiment of the ambient air filter device, the installation frame may include a grid, in particular arranged parallel to the filter element, through which the fluid flow passing through the filter element can pass and on which the filter element is arranged. The grid may serve as stable mechanical support for the filter element against a flow pressure of the passing air and yet offer a sufficient flow-through area for the air passing the filter element.

Advantageously, in a use arrangement both the air inlet side and the air outlet side may be fluidically connected to the environment. Advantageously, the air inlet side may be adapted to be flown through by unfiltered air and the air outlet side may be adapted to be flown through by filtered air.

Advantageously, the installation frame may be formed as part of the vehicle. Thus, a stable connection of the installation frame to the vehicle is ensured for reliable mounting of the filter element to the installation frame.

According to the proposed use of a filter element in an ambient air filter device the filter element is easily mountable in the installation frame. At least part of the filter element is tiltable. Such a filter element enables a bypass for the air normally passing the filter element and in that way makes sure that the thermal management, the A/C heat pump, and especially the battery charging time are not affected by the presence of the filter element in front of the radiator of the cooler of the vehicle.

### BRIEF DESCRIPTION OF DRAWINGS

The present invention together with the above-mentioned and other objects and advantages may best be understood from the following detailed description of the embodiments, but not restricted to the embodiments, wherein is shown in:
- Figure 1: an ambient air filter device for arrangement in a front area of a vehicle according to an embodiment of the invention in an isometric view;
- Figure 2: the ambient air filter device according to Fig. 1 in a rear view;
- Figure 3: the ambient air filter device in a section view according to section plane B-B in Fig. 2;
- Figure 4: the ambient air filter device according to Fig. 1 with part of the filter element tilted;
- Figure 5: the ambient air filter device according to Fig. 4 in a rear view; and
- Figure 6: the ambient air filter device in a section view according to section plane A-A in Fig. 5.

### DETAILED DESCRIPTION

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

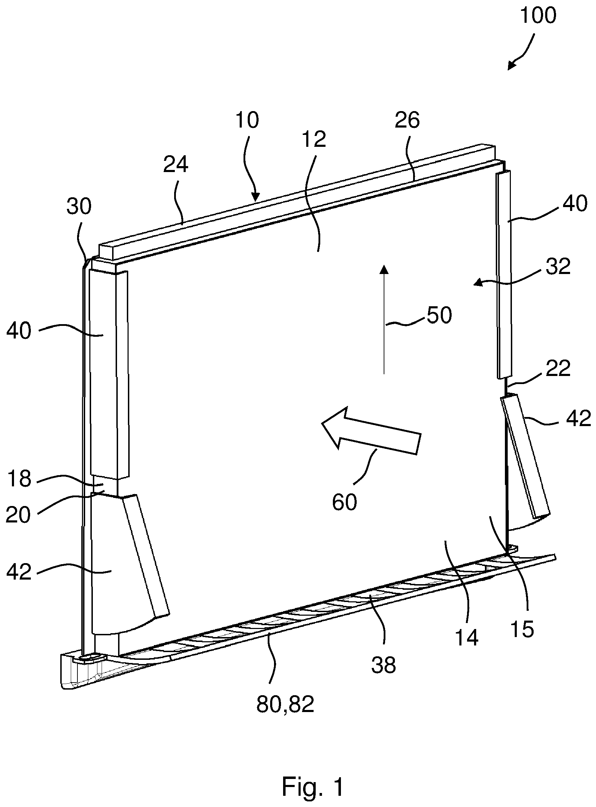

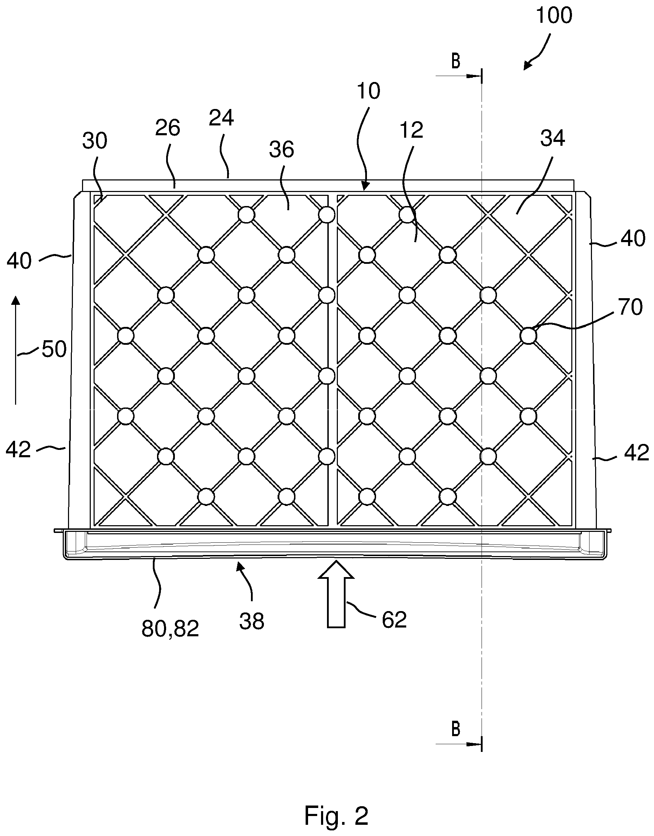

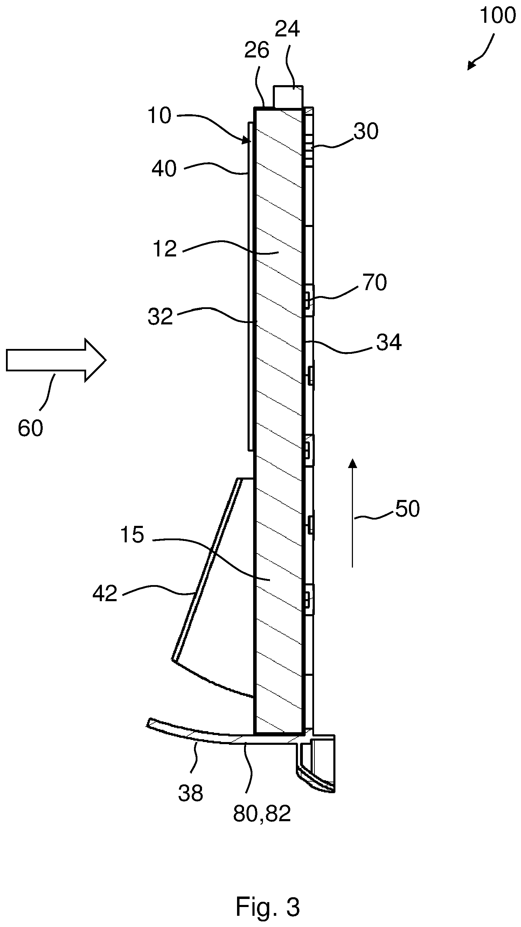

Figure 1 depicts an ambient air filter device 100 for arrangement in a front area of a vehicle according to an embodiment of the invention in an isometric view. Figure 2 depicts the ambient air filter device in a rear view, whereas in Figure 3 the ambient air filter device is shown in a section view according to section plane B-B in Figure 2.

The ambient air filter device 100 has an installation frame 30 which is designed for air to flow through it. A filter element 10 is arranged on the installation frame 30. The installation frame 30 provides a flow-through area 36 (shown in Figure 2) for a fluid flow passing through the filter element 10. The filter element 10 may be mounted in the insertion direction 50 from a lower side of the installation frame 30.

The installation frame 30 has an end stop 80, in particular a protrusion 82, at a lower end in the insertion direction 50, for fixing the filter element 10 in an intended mounting position.

The installation frame 30 may be formed as part of the vehicle.

The filter element 10 has an air inlet side 32 and an air outlet side 34 (shown in Figures 2 and 3). The installation frame 30 has two guiding members 40 on opposing sides of the flow-through area 36 for mounting the filter element 10 along the insertion direction 50.

The filter element 10 includes at least one filter medium body 12.

Opposing sides 20, 22 of the filter medium body 12 are covered by side bands 18.

Further, a sealing 24 is arranged on top side 26 of the filter medium body 12, in particular pointing in the insertion direction 50. Thus, in the mounting position in the front of the cooler of the vehicle, the filter element 10 may be sealed against the vehicle.

As may be seen from Figure 2, the installation frame 30 is provided with a grid 70, in particular arranged parallel to the filter element 10, through which an air flow can pass and on which the filter element 10 is arranged.

In a use arrangement both the air inlet side 32 and the air outlet side 34 may both be fluidically connected to the environment. The air inlet side 32 may be adapted to be flown through by unfiltered air and the air outlet side 34 may be adapted to be flown through by filtered air.

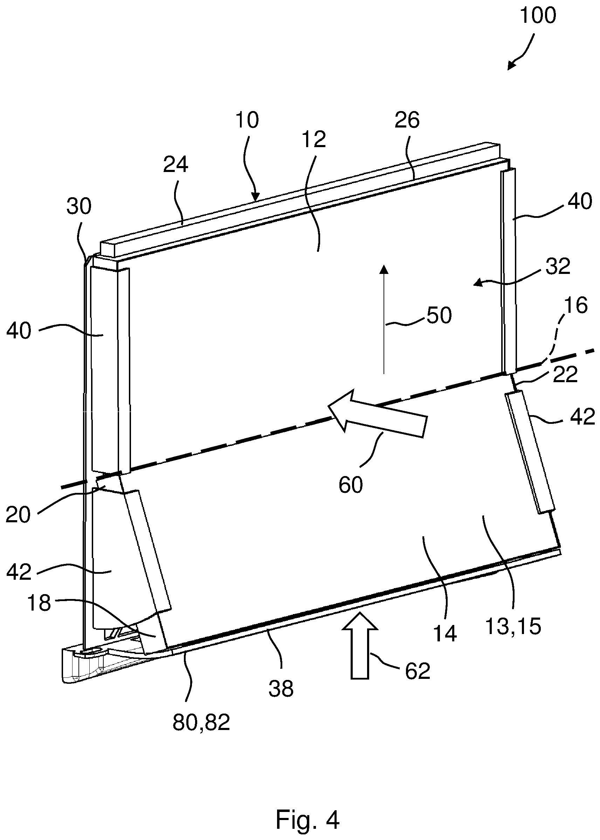

As is depicted in the Figures 4 to 6, at least one part 15 of the at least one filter medium body 12, 13 is tiltable about a tilt axis 16 against a through-flow direction 60 of the filter element 10 providing a bypass channel for the fluid flow. The tilt axis 16 is parallel to the installation frame 30. In this embodiment, the bypass channel opens at the bottom of the filter element 10 when the filter medium body 13 is in a tilted position.

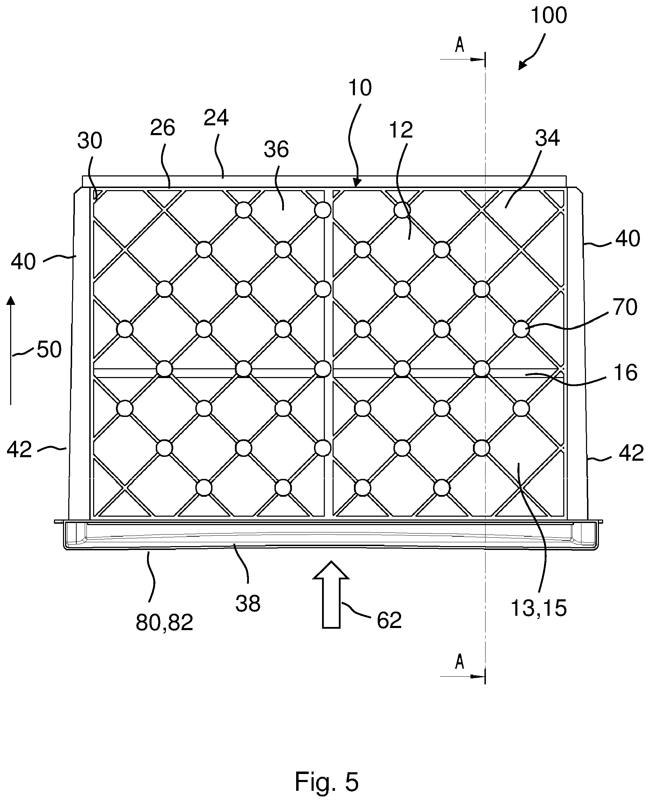

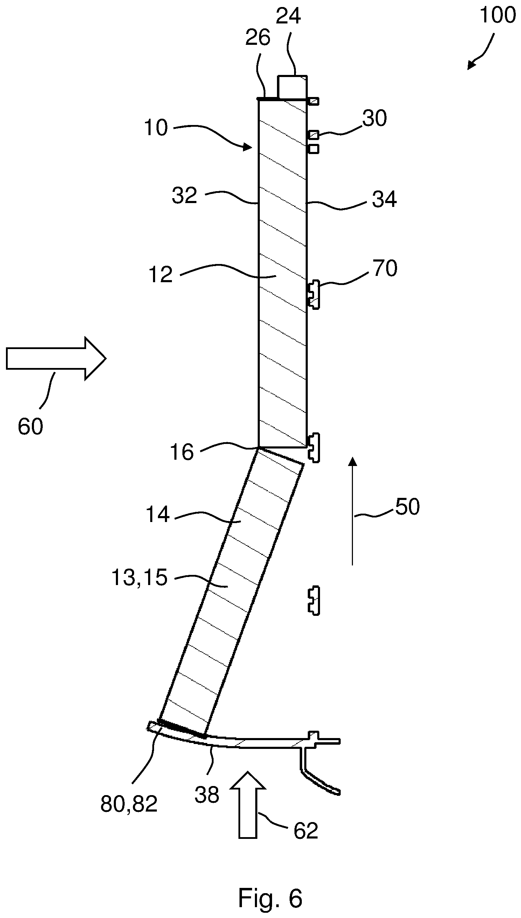

Figure 4 depicts the ambient air filter device 100 according to Figure 1 with part of the filter element 10 tilted. Figure 5 depicts the ambient air filter device 100 with part of the filter element tilted in a rear view, whereas in Figure 6 the ambient air filter device is shown in a section view according to section plane A-A in Figure 5.

If the filter medium body 12 includes a pleated medium 14, the tilt axis 16 may lie advantageously parallel one of the pleats of the filter medium body 12, in particular in one of the pleats of the filter medium body 12. Thus, the filter element 10 may easily be tilted about the tilt axis 16.

According to a further favorable embodiment, the filter element 10 may include at least two filter medium bodies 12, 13, wherein at least one of the two filter medium bodies 12, 13 is tiltable about the tilt axis 16 against a through-flow direction 60 of the filter element 10. The other one of the filter medium bodies 12, 13 may remain parallel to the installation frame 30.

The at least two filter medium bodies 12, 13 may be joined together by a side band and/or a hinge, in particular a plastics hinge. Thus, the tilt movement of the two filter medium bodies 12, 13 against each other may easily be achieved.

The installation frame 30 includes two end stop elements 42 on both sides of the installation frame 30, configured to limit a tilt movement of the at least one tiltable part 15 of the at least one filter medium body 12, 13. The end stop elements 42 are arranged as a prolongation of the end guiding members 40 and limit the tilt movement of the filter element 10 against the through-flow direction 60.

The end stop 80 at the lower part of the installation frame 30 is configured as another flow-through area 38 for air bypassing the at least one tiltable part 15 of the at least one filter element 10. If the part 15 of the filter medium body 12 or, in the case of two filter medium bodies 12, 13, one filter medium body 13 is tilted about the tilt axis 16, the other flow-through area 38 is opened. Air may bypass the filter element 10 in a bypass-flow direction 62 and may flow directly through the other flow-through area 38 to the flow-through area 36 of the installation frame 30.

The bypass may advantageously be opened if, e.g., critical thermal conditions of the battery of the vehicle are detected, in particular during fast charging of the battery.

### REFERENCE SIGNS LIST

- 10: filter element
- 12: filter medium body
- 13: filter medium body
- 14: filter medium
- 15: part
- 16: tilt axis
- 18: side band
- 20: side
- 22: side
- 24: sealing
- 26: side
- 30: installation frame
- 32: air inlet side
- 34: air outlet side
- 36: flow-through area
- 38: other flow-through area
- 40: guiding member
- 42: end stop element
- 50: insertion direction
- 52: fixing direction
- 60: through-flow direction
- 62: bypass-flow direction
- 70: grid
- 80: end stop
- 82: protrusion
- 100: ambient air filter device

## Claims

1. An ambient air filter device (100) for arrangement in a front area of a vehicle, the ambient air filter device (100) comprising:
an installation frame (30); and
a filter element (10) arranged on the installation frame (30),
wherein the installation frame (30) comprises a flow-through area (36) through which a fluid flow passing through the filter element (10) can pass, and at least one guiding member (40) arranged on opposing sides of the flow-through area (36) and for mounting the filter element (10) along an insertion direction (50), and
wherein the filter element (10) comprises at least one filter medium body (12, 13) having at least one part (15) tiltable about a tilt axis (16) against a through-flow direction (60) of the filter element (10) to provide a bypass channel for the fluid flow to bypass the filter element (10), wherein the at least one filter medium body (12, 13) comprises a pleated medium (14), and
wherein the tilt axis (16) lies substantially parallel to one of pleats of the pleated medium (14).

2. The ambient air filter device (100) according to claim 1, further comprising side bands (18) covering at least parts of opposing sides (20, 22) of the at least one filter medium body (12, 13).

3. The ambient air filter device (100) according to any one of claims 1 to 2, further comprising a sealing (24) arranged at least on one side (26) of the at least one filter medium body (12, 13).

4. The ambient air filter device (100) according to any one of claims 1 to 3, wherein the installation frame (30) further comprises at least one end stop element (42) for limiting a tilt movement of the at least one part (15) of the at least one filter medium body (12, 13).

5. The ambient air filter device (100) according to any one of claims 1 to 4, wherein the filter element (10) comprises at least two filter medium bodies (12, 13), and
wherein at least one of the at least two filter medium bodies (12, 13) is tiltable about the tilt axis (16) against the through-flow direction (60) of the filter element (10) to provide the bypass channel for the fluid flow to bypass the filter element (10).

6. The ambient air filter device (100) according to claim 5, wherein the at least two filter medium bodies (12, 13) are joined together by a side band and/or a hinge.

7. The ambient air filter device (100) according to any one of claims 1 to 6, wherein the insertion direction (50) is substantially perpendicular to the through-flow direction (60) of the filter element (10).

8. The ambient air filter device (100) according to any one of claims 1 to 7, wherein the installation frame (30) comprises an end stop (80) arranged at a lower end in the insertion direction (50), the end stop (80) being for fixing the filter element (10) in an intended mounting position, and the end stop (80) comprising another flow-through area (38) through which the fluid flow bypassing the filter element (10) can pass.

9. The ambient air filter device (100) according to any one of claims 1 to 8, wherein the installation frame (30) comprises a grid (70) through which the fluid flow passing through the filter element (10) can pass and on which the filter element (10) is arranged.

10. Use of a filter element (10) in the ambient air filter device (100) according to any one of claims 1 to 9, the filter element (10) comprising:
an air inlet side (32) and an air outlet side (34) through which the fluid flow can pass to the installation frame (30); and
the at least one filter medium body (12, 13) having the at least one part (15) tiltable about the tilt axis (16) against the through-flow direction (60) of the filter element (10) to provide the bypass channel for the fluid flow to bypass the filter element (10).

## Patentansprüche

1. Umgebungsluftfiltervorrichtung (100) zur Anordnung im Frontbereich eines Fahrzeugs, wobei die Umgebungsluftfiltervorrichtung (100) umfasst:
einen Montagerahmen (30); und
ein Filterelement (10), das an dem Montagerahmen (30) angeordnet ist,
wobei der Montagerahmen (30) einen Durchströmungsbereich (36), durch den ein das Filterelement (10) durchströmender Fluidstrom hindurchströmen kann, und mindestens ein an gegenüberliegenden Seiten des Durchströmungsbereichs (36) angeordnetes Führungselement (40) zur Montage des Filterelements (10) entlang einer Einführrichtung (50) umfasst, und
wobei das Filterelement (10) mindestens einen Filtermedienkörper (12, 13) mit mindestens einem Teil (15), der um eine Kippachse (16) entgegen einer Durchströmungsrichtung (60) des Filterelements (10) kippbar ist, um einen Bypasskanal für den Fluidstrom zur Umgehung des Filterelements (10) bereitzustellen, wobei der mindestens eine Filtermedienkörper (12, 13) ein Faltenmedium (14) umfasst, und
wobei die Kippachse (16) im Wesentlichen parallel zu einer der Falten des Faltenmediums (14) verläuft.

2. Umgebungsluftfiltervorrichtung (100) nach Anspruch 1, ferner Seitenstreifen (18) umfassend, die zumindest Teile der gegenüberliegenden Seiten (20, 22) des mindestens einen Filtermedienkörpers (12, 13) abdecken.

3. Umgebungsluftfiltervorrichtung (100) nach einem der Ansprüche 1 bis 2, ferner eine Dichtung (24) umfassend, die an mindestens einer Seite (26) des mindestens einen Filtermedienkörpers (12, 13) angeordnet ist.

4. Umgebungsluftfiltervorrichtung (100) nach einem der Ansprüche 1 bis 3, wobei der Montagerahmen (30) ferner mindestens ein Endanschlagelement (42) zum Begrenzen einer Kippbewegung des mindestens einen Teils (15) des mindestens einen Filtermedienkörpers (12, 13) umfasst.

5. Umgebungsluftfiltervorrichtung (100) nach einem der Ansprüche 1 bis 4, wobei das Filterelement (10) mindestens zwei Filtermedienkörper (12, 13) umfasst, und
wobei mindestens einer der mindestens zwei Filtermedienkörper (12, 13) um die Kippachse (16) entgegen der Durchströmungsrichtung (60) des Filterelements (10) kippbar ist, um den Bypasskanal für den Fluidstrom zur Umgehung des Filterelements (10) bereitzustellen.

6. Umgebungsluftfiltervorrichtung (100) nach Anspruch 5, wobei die mindestens zwei Filtermedienkörper (12, 13) durch einen Seitenstreifen und/oder ein Scharnier miteinander verbunden sind.

7. Umgebungsluftfiltervorrichtung (100) nach einem der Ansprüche 1 bis 6, wobei die Einführrichtung (50) im Wesentlichen senkrecht zur Durchströmungsrichtung (60) des Filterelements (10) verläuft.

8. Umgebungsluftfiltervorrichtung (100) nach einem der Ansprüche 1 bis 7, wobei der Montagerahmen (30) einen Endanschlag (80) umfasst, der an einem unteren Ende in Einführrichtung (50) angeordnet ist, wobei der Endanschlag (80) dazu dient, das Filterelement (10) in einer vorgesehenen Montageposition zu fixieren, und der Endanschlag (80) einen weiteren Durchströmungsbereich (38) umfasst, durch den der das Filterelement (10) umgehende Fluidstrom strömen kann.

9. Umgebungsluftfiltervorrichtung (100) nach einem der Ansprüche 1 bis 8, wobei der Montagerahmen (30) ein Gitter (70) umfasst, durch das der durch das Filterelement (10) strömende Fluidstrom hindurchströmen kann und auf dem das Filterelement (10) angeordnet ist.

10. Verwendung eines Filterelements (10) in der Umgebungsluftfiltervorrichtung (100) nach einem der Ansprüche 1 bis 9, wobei das Filterelement (10) umfasst:
eine Lufteinlassseite (32) und eine Luftauslassseite (34), durch die der Fluidstrom zum Montagerahmen (30) strömen kann; und
den mindestens einen Filtermedienkörper (12, 13) mit dem mindestens einem Teil (15), der um die Kippachse (16) entgegen der Durchströmungsrichtung (60) des Filterelements (10) kippbar ist, um den Bypasskanal für den Fluidstrom zur Umgehung des Filterelements (10) bereitzustellen.

## Revendications

1. Dispositif de filtre à air ambiant (100) destiné à être disposé dans la partie avant d'un véhicule, le dispositif de filtre à air ambiant (100) comprenant:
un cadre de montage (30); et
un élément de filtre (10) disposé sur le cadre de montage (30),
dans lequel le cadre de montage (30) comprend une zone de passage (36) à travers laquelle un écoulement de fluide traversant l'élément de filtre (10) peut passer, et au moins un élément de guidage (40) disposé sur les côtés opposés de la zone de passage (36) pour monter l'élément de filtre (10) le long d'un sens d'enfichage (50), et
dans lequel l'élément de filtre (10) comprend au moins un corps de milieu filtrant (12, 13) ayant au moins une partie (15) pouvant basculer autour d'un axe de basculement (16) à l'encontre d'une direction d'écoulement (60) de l'élément de filtre (10) afin de mettre à disposition un canal de dérivation permettant à l'écoulement de fluide de contourner l'élément de filtre (10), dans lequel le corps de milieu filtrant (12, 13), au moins au nombre d'un, comprend un milieu plissé (14), et
dans lequel l'axe de basculement (16) est sensiblement parallèle à l'un des plis du milieu plissé (14).

2. Dispositif de filtre à air ambiant (100) selon la revendication 1, comprenant en outre des bandes latérales (18) couvrant au moins des parties des côtés opposés (20, 22) du corps de milieu filtrant (12, 13), au moins au nombre d'un.

3. Dispositif de filtre à air ambiant (100) selon l'une quelconque des revendications 1 à 2, comprenant en outre un joint d'étanchéité (24) disposé au moins sur un côté (26) du corps de milieu filtrant (12, 13), au moins au nombre d'un.

4. Dispositif de filtre à air ambiant (100) selon l'une quelconque des revendications 1 à 3, dans lequel le cadre de montage (30) comprend en outre au moins un élément de butée d'extrémité (42) destiné à limiter un mouvement de basculement de la partie (15), au moins au nombre d'une, du corps de milieu filtrant (12, 13), au moins au nombre d'un.

5. Dispositif de filtre à air ambiant (100) selon l'une quelconque des revendications 1 à 4, dans lequel l'élément de filtre (10) comprend au moins deux corps de milieu filtrant (12, 13), et
dans lequel au moins l'un des corps de milieu filtrant (12, 13), au moins au nombre de deux, peut être basculé autour de l'axe de basculement (16) à l'encontre de la direction d'écoulement (60) de l'élément de filtre (10) afin de former le canal de dérivation permettant à l'écoulement de fluide de contourner l'élément de filtre (10).

6. Dispositif de filtre à air ambiant (100) selon la revendication 5, dans lequel les corps de milieu filtrant (12, 13), au moins au nombre de deux, sont reliés entre eux par une bande latérale et/ou une charnière.

7. Dispositif de filtre à air ambiant (100) selon l'une quelconque des revendications 1 à 6, dans lequel le sens d'enfichage (50) est sensiblement perpendiculaire à la direction d'écoulement (60) de l'élément de filtre (10).

8. Dispositif de filtre à air ambiant (100) selon l'une quelconque des revendications 1 à 7, dans lequel le cadre de montage (30) comprend une butée d'extrémité (80) disposée à une extrémité inférieure dans le sens d'enfichage (50), la butée d'extrémité (80) servant à fixer l'élément de filtre (10) dans une position de montage prévue, et la butée d'extrémité (80) comprenant une autre zone de passage (38) à travers laquelle l'écoulement de fluide contournant l'élément de filtre (10) peut passer.

9. Dispositif de filtre à air ambiant (100) selon l'une quelconque des revendications 1 à 8, dans lequel le cadre de montage (30) comprend une grille (70) à travers laquelle l'écoulement de fluide traversant l'élément de filtre (10) peut passer et sur laquelle l'élément de filtre (10) est disposé.

10. Utilisation d'un élément de filtre (10) dans le dispositif de filtre à air ambiant (100) selon l'une quelconque des revendications 1 à 9, l'élément de filtre (10) comprenant:
un côté entrée d'air (32) et un côté sortie d'air (34) à travers lesquels l'écoulement de fluide peut passer vers le cadre de montage (30); et
le corps de milieu filtrant (12, 13), au moins au nombre d'un, ayant la partie (15), au moins au nombre d'une, pouvant basculer autour de l'axe de basculement (16) à l'encontre de la direction d'écoulement (60) de l'élément de filtre (10) afin de former le canal de dérivation permettant à l'écoulement de fluide de contourner l'élément de filtre (10).
